# EUROPEAN PATENT APPLICATION

(11) **EP 4 819 301 A1**
(43) Date of publication of application: **07.10.2026**
(21) Application number: 26168808.9
(22) Date of filing: 29.03.2026
(51) Int. Cl.: H01M 10/615, H01M 10/6571, H01M 10/48

(54) **ENERGY STORAGE DEVICE AND HEATING CONTROL METHOD**

(30) Priority: 02.04.2025 CN 202510424195
(71) Applicant: Shenzhen Anker Solix Technology Co., Ltd., Shenzhen City, Guangdong Province 518101 (CN)
(72) Inventor: CHEN, Wei, Shenzhen City, 518101 (CN); LI, Yiyong, Shenzhen City, 518101 (CN)
(74) Representative: De Arpe Tejero, Manuel

(57) **Abstract**

The present application discloses an energy storage device (100) and a heating control method for the energy storage device (100). The method includes: acquiring (S104) a current actual charging current value of the battery unit (11) and a first preset current value; calculating (S105) a first difference value between a preset limited charging current value of the battery unit (11) and the acquired first preset current value; obtaining (S106) a first heating control signal based on the current actual charging current value, the first difference value, a second difference value, and parameters of the heating unit (12); and repeating the operation of acquiring (S104) the current actual charging current value of the battery unit (11) and a first preset current value, until the current actual charging current value of the battery unit (11) is greater than the first difference value and less than the second difference value.

## Description

### TECHNICAL FIELD

The present disclosure relates to the technical field of energy storage, and in particular to an energy storage device and a heating control method for the energy storage device.

### BACKGROUND

A photovoltaic power supply system includes a photovoltaic module, a power source, a heating film, and a switch tube. The heating film and the switch tube are connected in series, and the series-connected heating film and switch tube are connected in parallel with the power source. The photovoltaic module is configured to charge the power source.

In the related art, the heating film is controlled to heat by switching the control switch on or off. However, the power supplied by the photovoltaic module to the power source cannot meet the demand of the heating film, thereby resulting in a problem that a heating film cannot work, and further resulting in a low utilization rate.

### SUMMARY

Some embodiments of the present disclosure provide an energy storage device and a heating control method for the energy storage device.

The present disclosure provides the heating control method for the energy storage device, applied to the energy storage device. The energy storage device is configured to connect a charging device and a load, and the charging device is configured to supply power to the energy storage device and the load. The energy storage device includes a battery unit and a heating unit connected in parallel with the battery unit. The heating control method includes the following operations.

Acquiring a current actual charging current value of the battery unit and a first preset current value.

Calculating a first difference value between a preset limited charging current value of the battery unit and the acquired first preset current value.

Obtaining a first heating control signal based on the current actual charging current value, the first difference value, a second difference value, and parameters of the heating unit. The first heating control signal is configured to make the heating unit heat the battery unit based on the first heating control signal; repeating the operation of acquiring the current actual charging current value of the battery unit and the first preset current value, until the current actual charging current value of the battery unit is greater than the first difference value and less than the second difference value. The second difference value is a difference between the limited charging current value and an acquired second preset current value, and the second preset current value is less than the first preset current value.

The present disclosure further may provide an energy storage device. The energy storage device is configured to connect a charging device and a load. The charging device is configured to supply power to the energy storage device and the load. The energy storage device includes a control unit, a battery unit, and a heating unit connected in parallel with the battery unit. The control unit is connected to the charging device, the battery unit, the heating unit, and the load, respectively. The control unit controls the energy storage device based on the heating control method described above.

### BRIEF DESCRIPTION OF THE DRAWINGS

To explain the technical solutions in the embodiments of the present disclosure more clearly, the drawings required for the description of the embodiments will be briefly introduced below. Obviously, the drawings described below are only some embodiments of the present disclosure. For those skilled in the art, other drawings may be obtained based on these drawings without creative work.
FIG. 1 is a schematic frame diagram of an energy storage device provided by the present disclosure.
FIG. 2 is a schematic flow diagram of some embodiments of a heating control method for the energy storage device in FIG. 1.
FIG. 3 is a schematic flow diagram of some embodiments of operation S106 in FIG. 2.
FIG. 4 is a schematic flow diagram of some embodiments of operation S106 in FIG. 2.
FIG. 5 is a schematic flow diagram of some embodiments of the heating control method for the energy storage device in FIG. 1.
FIG. 6 is a schematic flow diagram of some embodiments of operation S103 in FIG. 2.
FIG. 7 is a schematic circuit diagram of some embodiments of the energy storage device in FIG. 1.
FIG. 8 is a schematic flow diagram of some embodiments of operation S103 of the energy storage device in FIG. 7.

### DETAILED DESCRIPTION

Some embodiments of the technical solution of the present disclosure will be described in detail below with reference to the accompanying drawings. The following embodiments are only used to explain the technical solution of the present disclosure more clearly, and thus are only taken as examples, and cannot be used to limit the protection scope of the present disclosure.

Unless otherwise defined, all technical and scientific terms used herein have the same meanings as those commonly understood by those skilled in the art to which the present disclosure belongs. The terms used herein are only for the purpose of describing specific embodiments, and are not intended to limit the present disclosure. The terms "include" and "have" and any variations thereof in the specification, claims and the above description of the drawings of the present disclosure are intended to cover non-exclusive inclusion.

In the description of the embodiments of the present disclosure, the technical terms "first", "second" and the like are only used to distinguish different objects, and cannot be understood as indicating or implying relative importance, or implicitly indicating the number, specific order or primary-secondary relationship of the indicated technical features.

Reference to "embodiment" herein means that feature, structure or characteristic described in connection with some embodiments may be included in at least one embodiment of the present disclosure. The appearance of the phrase in various positions in the specification does not necessarily refer to the same embodiment, nor is it an independent or alternative embodiments exclusive of other embodiments. Those skilled in the art will explicitly and implicitly understand that the embodiments described herein may be combined with other embodiments.

In the description of the embodiments of the present disclosure, the term "a plurality of" refers to two or more (including two). Similarly, "a plurality of groups" refers to two or more groups (including two groups), and "a plurality of pieces" refers to two or more pieces (including two pieces).

In the description of the embodiments of the present disclosure, technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial" and "circumferential" indicating the orientation or positional relationship are based on the orientation or positional relationship shown in the drawings, which are only for the convenience of describing some embodiments of the present disclosure and simplifying the description, and do not indicate or imply that the indicated device or element must have a specific orientation, be constructed and operated in a specific orientation, and thus cannot be understood as a limitation to some embodiments of the present disclosure.

In the description of some embodiments of the present disclosure, unless otherwise clearly specified and limited, the technical terms "installation", "connection", "fixation" and the like shall be understood in a broad sense. For example, it may be a fixed connection, a detachable connection or an integral connection; it may also be a mechanical connection or an electrical connection; it may be a direct connection or an indirect connection through an intermediate medium, and may also be the internal communication between two elements or the interaction relationship between two elements. For those skilled in the art, the specific meanings of the above terms in some embodiments of the present disclosure may be understood based on specific situations.

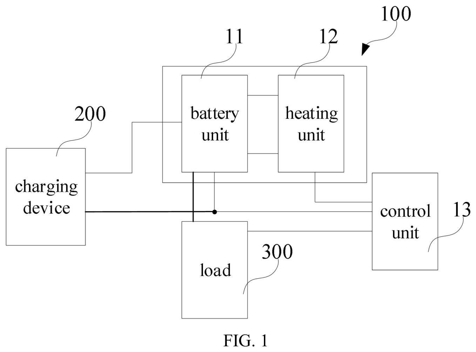

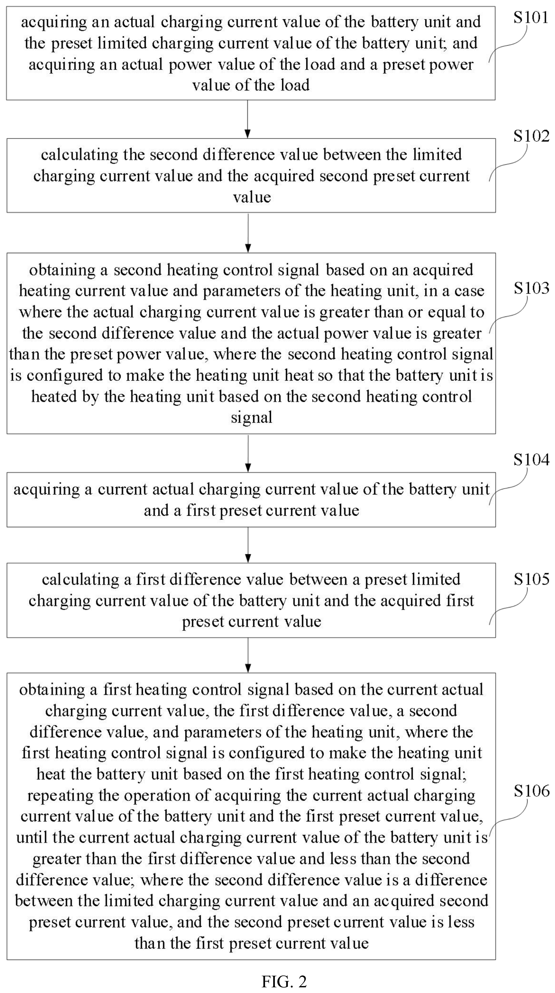

As shown in FIG. 1 and FIG. 2, FIG. 1 is a schematic frame diagram of an energy storage device provided by the present disclosure, and FIG. 2 is a schematic flow diagram of some embodiments of a heating control method for the energy storage device in FIG. 1. Some embodiments of the control method may be applied to the energy storage device 100. The energy storage device 100 may be applied to a photovoltaic power supply system or other power supply systems.

The energy storage device 100 is configured to connect a charging device 200 and a load 300. The charging device 200 is configured to supply power to the energy storage device 100 and the load 300. In some embodiments, the charging device 200 may include, but is not limited to, a photovoltaic module or other power source modules. The load 300 may include, but is not limited to, a micro-inverter, and the micro-inverter is configured to convert the direct current of the photovoltaic module into the alternating current required by a power grid. In some embodiments, an output end of the charging device 200 may be respectively connected to the energy storage device 100 and the load 300.

The energy storage device 100 includes a battery unit 11 and a heating unit 12 connected in parallel with the battery unit 11. An end of the heating unit 12 may be electrically connected to an end of the battery unit 11. Another end of the heating unit 12 may be electrically connected to another end of the battery unit 11. The battery unit 11 may include, but is not limited to, a battery pack or a battery cluster and the like. For example, the charging device 200 may be configured to charge the battery unit 11, and the battery unit 11 may be configured to supply power to the heating unit 12.

In some embodiments, the energy storage device 100 may further include a control unit 13. The control unit 13 may be respectively connected to the charging device 200, the battery unit 11, the heating unit 12 and the load 300. The control unit 13 may be configured to control the energy storage device 100. In some embodiments, the control unit 13 may be disposed outside the energy storage device 100.

The heating control method of some embodiments may include the following operations.

In an operation S104, a current actual charging current value of the battery unit 11 and a first preset current value is acquired.

The current actual charging current value of the battery unit 11 and the first preset current value may be acquired by the control unit 13. That is, after the battery unit 11 may be heated by the heating unit 12 based on the second heating control signal, the control unit 13 may acquire the current actual charging current value of the battery unit 11 and acquire the preset first preset current value.

In an operation S105, a first difference value between a preset limited charging current value of the battery unit and the acquired first preset current value is calculated.

The first difference value between the limited charging current value and the acquired first preset current value may be calculated by the control unit 13. That is, the control unit 13 may obtain the first difference value by subtracting the first preset current value from the limited charging current value. The second preset current value may be less than the first preset current value, so the second difference value may be greater than the first difference value. For example, the second preset current value may be 0.2A, and the first preset current value may be 1.2A.

In an operation S106, a first heating control signal based on the current actual charging current value, the first difference value, a second difference value and parameters of the heating unit is obtained, the first heating control signal is configured to make the heating unit 12 heat the battery unit 11 based on the first heating control signal, the operation of acquiring the current actual charging current value of the battery unit and the first preset current value is repeated until the current actual charging current value of the battery unit 11 is greater than the first difference value and less than the second difference value. The second difference value is a difference between the limited charging current value and an acquired second preset current value, and the second preset current value is less than the first preset current value.

The first heating control signal based on the current actual charging current value, the first difference value, the second difference value and the parameters of the heating unit may be obtained by the control unit 13. The first heating control signal may be configured to make the heating unit 12 heat the battery unit 11 based on the first heating control signal. The operation of acquiring the current actual charging current value of the battery unit 11 and the first preset current value is repeated. That is, the process may return to operation S104. In a case where the current actual charging current value of the battery unit 11 is less than or equal to the first difference value, or the current actual charging current value of the battery unit 11 is greater than or equal to the second difference value, operations S104 to S106 may be cyclically executed until the current actual charging current value of the battery unit 11 is greater than the first difference value and less than the second difference value.

The heating control method of some embodiments may further include the following operations.

In an operation S101, an actual charging current value of the battery unit 11 and the preset limited charging current value of the battery unit 11 is acquired, and an actual power value of the load 300 and a preset power value of the load 300 are acquired.

The actual charging current value of the battery unit 11 and the preset limited charging current value of the battery unit 11 may be acquired by the control unit 13. The actual power value of the load 300 and the preset power value of the load 300 may also be acquired by the control unit 13. For example, the control unit 13 may acquire the actual charging current value of the battery unit 11 and the preset limited charging current value of the battery unit 11, and acquire the actual power value of the load 300 and the preset power value of the load 300 based on a preset cycle, so as to realize a periodic acquisition of the actual charging current value of the battery unit 11 and the preset limited charging current value of the battery unit 11. The preset cycle may include, but is not limited to, 50ms, 100ms, 200ms, 300ms, 500ms or 1000ms and the like.

The actual charging current value of the battery unit 11 may refer to the actual charging current value at which the charging device 200 charges the battery unit 11. The preset limited charging current value of the battery unit 11 may refer to the charging current value allowed by the battery unit 11. For example, the preset limited charging current value of the battery unit 11 may be the rated current value of the battery unit 11. The actual power value of the load 300 may refer to the actual power value at which the charging device 200 supplies power to the load 300. The preset power value may refer to the power value allowed by the load 300, i.e., the rated power value of the load 300.

In an operation S102, a second difference value between the limited charging current value and an acquired second preset current value is calculated.

The second difference value between the limited charging current value and the acquired second preset current value may be calculated by the control unit 13. That is, the second difference value may be obtained by subtracting the second preset current value from the limited charging current value.

In an operation S103, a second heating control signal based on the acquired heating current value and parameters of the heating unit 12 is obtained, in a case where the actual charging current value is greater than or equal to the second difference value and the actual power value is greater than the preset power value, the second heating control signal is configured to make the heating unit 12 heat the battery unit 11 based on the second heating control signal.

The control unit 13 may be configured to compare the actual charging current with the second difference value, and compare the actual power value with the preset power value. In a case where the actual charging current value is greater than or equal to the second difference value and the actual power value is greater than the preset power value, the control unit 13 may obtain the second heating control signal based on the acquired heating current value and the parameters of the heating unit 12. The second heating control signal may be configured to make the heating unit 12 heat the battery unit 11 based on the second heating control signal.

In some embodiments, the heating current value may refer to the current value at which the battery unit 11 supplies power to the heating unit 12. The battery unit 11 may be heated by the heating unit 12. The parameters of the heating unit 12 may include, but are not limited to, a rated voltage value of the heating unit 12 and a resistance value of the heating unit 12.

In a case where the current actual charging current value of the battery unit 11 is greater than the first difference value and less than the second difference value, the cyclic execution of operations S104 to S106 may be stopped. The operation of acquiring the actual charging current value of the battery unit 11 and the preset limited charging current value of the battery unit 11 may be repeated after an interval of a first preset time. That is, the process may return to operation S101, so as to realize the periodic acquisition of the actual charging current value of the battery unit 11 and the preset limited charging current value of the battery unit 11. A sum of the first preset time and the time for executing operations S101 to S106 may be equal to the preset cycle.

In some embodiments, in a case where the actual charging current value is greater than or equal to the second difference value and the actual power value is greater than the preset power value, a second heating control signal may be obtained based on the acquired heating current value and the parameters of the heating unit. The second heating control signal may be configured to make the heating unit 12 heat the battery unit 11based on the second heating control signal. In this way, the charging device 200 may be ensured to meet the charging demand of the battery unit 11 and the preset power of the load 300 before the heating unit 12 is controlled to perform heating, thus reducing the possibility of overload of the charging device 200. A first heating control signal may be obtained based on the current actual charging current value of the battery unit 11, the first difference value, the second difference value, and the parameters of the heating unit 12. The first heating control signal is configured to make the heating unit 12 heat the battery unit 11 based on the first heating control signal. The operation of acquiring the current actual charging current value of the battery unit 11 and the first preset current value may be repeated until the current actual charging current value of the battery unit 11 is greater than the first difference value and less than the second difference value. In this way, the heating unit 12 may be adjusted by tracking the output of the charging device 200, thereby improving the heating efficiency of the heating unit 12 and increasing the utilization rate of the energy storage device 100. The dynamic adjustment of the first heating control signal and the second heating control signal may be adopted to adjust the heating unit 12, thereby ensuring that the battery unit 11 is always in a suitable temperature range, and reducing the possibility of performance degradation or potential safety hazards of the battery unit 11 caused by overheating or overcooling. The actual power value and the preset power value of the load 300 may be acquired in real time, and the actual power value may be greater than the preset power value. In this way, the power supply demand of the load 300 may be preferentially met when the power of the load 300 is high, thus reducing an influence of the high-power consumption of the heating unit 12 on the normal operation of the load 300. In addition, the heating unit 12 may reach its maximum heating power on the premise of avoiding the overload of the energy storage device 100.

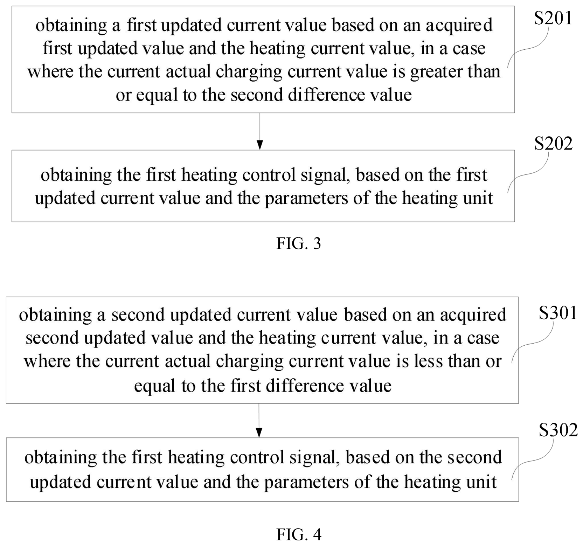

Based on some embodiments of the present disclosure, as shown in FIG. 3, FIG. 3 is a schematic flow diagram of some embodiments of operation S106 in FIG. 2. Operation S106 of some embodiments may include the following operations.

In an operation S201, a first updated current value may be obtained based on an acquired first updated value and the heating current value, in a case where the current actual charging current value is greater than or equal to the second difference value.

The current actual charging current may be compared with the second difference value by the control unit 13. In a case where the current actual charging current value is greater than or equal to the second difference value, the first updated current value may be obtained by the control unit 13 based on the acquired first updated value and the heating current value.

In some embodiments, the first updated value may be equal to the second preset current value. For example, the second preset current value may be 0.2A, the first updated value may be 0.2A, the heating current value may be 0.2A, and the limited charging current value may be 2A. In this case, the second difference value may be calculated by the control unit 13 as 1.8A. In a case where the current actual charging current value is greater than or equal to 1.8A, the first updated current value may be obtained by the control unit 13 by adding the first updated value to the heating current value. That is, the first updated current value may be 0.4A. In some embodiments, the first updated value may be not equal to the second preset current value.

In an operation S202, the first heating control signal may be obtained based on the first updated current value and the parameters of the heating unit 12.

The first heating control signal may be obtained by the control unit 13 based on the first updated current value and the parameters of the heating unit 12, the first heating control signal is configured to make the heating unit 12 heat the battery unit 11 based on the first heating control signal. The operation of acquiring the current actual charging current value of the battery unit 11 and the first preset current value may be repeated. That is, the process may return to operation S104. In a case where the current actual charging current value of the battery unit 11 is less than or equal to the first difference value, or the current actual charging current value of the battery unit 11 is greater than or equal to the second difference value, operations S104 to S106 may be cyclically executed until the current actual charging current value of the battery unit 11 is greater than the first difference value and less than the second difference value.

In some embodiments, in a case where the current actual charging current value is greater than or equal to the second difference value, the first updated current value may be obtained based on the acquired first updated value and the heating current value, and the first heating control signal may be obtained based on the first updated current value and the parameters of the heating unit 12. In this way, the charging device 200 may be ensured to meet the charging demand of the battery unit 11 and the preset power of the load 300 before the heating unit 12 is controlled to heat the battery unit 11 based on the first heating control signal, thus reducing the possibility of overload of the charging device 200 and improving the heating efficiency of the heating unit 12.

Based on some embodiments of the present disclosure, operation S201 may include the following operation: a sum of the acquired first updated value and the heating current value may be taken as the first updated current value. That is, the control unit 13 may take the sum of the acquired first updated value and the heating current value as the first updated current value.

In some embodiments, the current actual charging current may be periodically compared with the second difference value by the control unit 13. In a case where the current actual charging current value is greater than or equal to the second difference value, the control unit 13 may take the sum of the acquired first updated value and the heating current value as the first updated current value, so as to realize the accumulation of the first updated value. For example, the control unit 13 may obtain the first updated current value by adding the first updated value to the heating current value in the current cycle. That is, the first updated current value may be 0.4A. In the next cycle, the heating current value may be 0.4A, and the control unit 13 may obtain the first updated current value by adding the first updated value to the heating current value. That is, 0.4+0.4=0.8A, so the first updated current value may be 0.8A.

In some embodiments, the sum of the acquired first updated value and the heating current value may be taken as the first updated current value, which is easy to implement. The first updated current value may be obtained by the accumulating the first updated value. Therefore, the adjustment of the heating unit 12 can be realized by tracking the output of the charging device 200.

Based on some embodiments of the present disclosure, as shown in FIG. 4, FIG. 4 is a schematic flow diagram of some embodiments of operation S106 in FIG. 2. Operation S106 of some embodiments may include the following operations.

In an operation S301, a second updated current value may be obtained based on an acquired second updated value and the heating current value, in a case where the current actual charging current value is less than or equal to the first difference value.

The comparison between the current actual charging current value and the first difference value may be executed by the control unit 13. In a case where the current actual charging current value is less than or equal to the first difference value, the second updated current value and the heating current value may be obtained by the control unit 13 based on the acquired second updated value. For example, the first preset current value may be 1.2A, and the limited charging current value may be 2A. The first difference value may be calculated by the control unit 13 as 0.8A. In a case where the current actual charging current value is less than or equal to 0.8A, the second updated current value may be obtained by the control unit 13 based on the acquired second updated value and the heating current value.

In an operation S302, the first heating control signal may be obtained based on the second updated current value and the parameters of the heating unit.

The first heating control signal may be obtained by the control unit 13 based on the second updated current value and the parameters of the heating unit. The first heating control signal is configured to make the heating unit 12 heat the battery unit 11 based on the first heating control signal. The operation of acquiring the actual charging current value of the battery unit 11 may be repeated. That is, the process may return to operation S101, until the current actual charging current value of the battery unit 11 is greater than the first difference value and less than the second difference value.

In some embodiments, in a case where the current actual charging current value is less than or equal to the first difference value, the second updated current value may be obtained based on the acquired second updated value and the heating current value, and a first heating control signal may be obtained based on the second updated current value and the parameters of the heating unit 12. In a case where the current actual charging current value is less than or equal to the first difference value, that is, the charging device 200 cannot meet the charging demand of the battery unit 11, the heating current of the heating unit 12 may be adjusted by the second updated value, so that the charging device 200 can meet the charging demand of the battery unit 11 before the heating unit 12 is controlled to heat the battery unit 11 based on the first heating control signal.

Based on some embodiments of the present disclosure, operation S301 may include the following operation. A difference value between the limited charging current value and the current actual charging current value of the battery unit 11 may be taken as the second updated value. That is, the control unit 13 may obtain the second updated value by subtracting the current actual charging current value from the limited charging current value.

In some embodiments, operation S301 may include the following operation. A difference value between the heating current value and the second updated value is taken as the second updated current value. The control unit 13 may take the difference value between the heating current value and the second updated value as the second updated current value. That is, the control unit 13 may be configured to obtain the second updated current value by subtracting the second updated value from the heating current value.

In some embodiments, the difference value between the limited charging current value and the current actual charging current value of the battery unit 11 may be taken as the second updated value. The difference value between the heating current value and the second updated value may be taken as the second updated current value. In a case where the current actual charging current value is less than or equal to the first difference value, the charging device 200 cannot meet the charging demand of the battery unit 11. The difference value between the heating current value and the second updated value may be taken as the second updated current value to reduce the heating current of the heating unit 12, so that the charging device 200 can meet the charging demand of the battery unit 11 before the heating unit 12 is controlled to heat the battery unit 11 based on the first heating control signal.

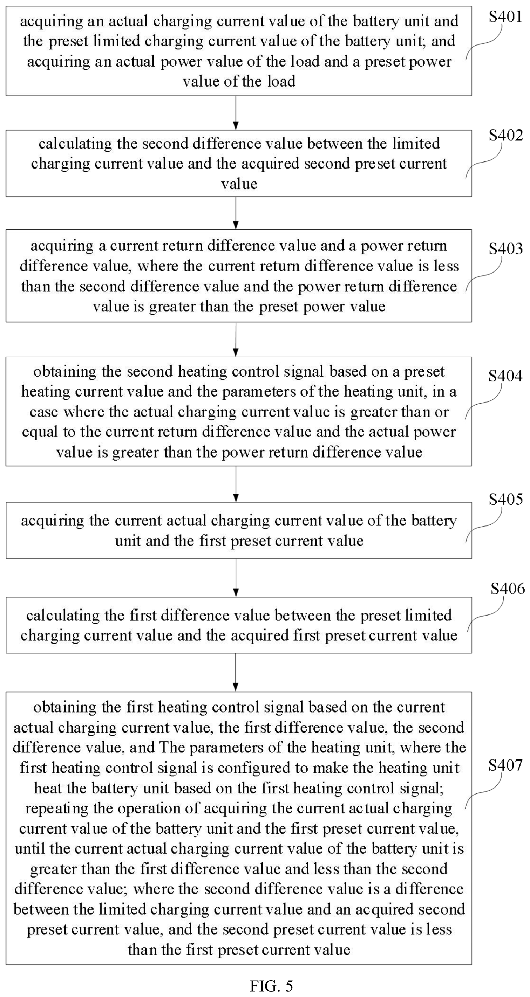

Based on some embodiments of the present disclosure, as shown in FIG. 5, FIG. 5 is a schematic flow diagram of some embodiments of the heating control method for the energy storage device in FIG. 1. In some embodiments, the heating control method may include the following operations.

In an operation S401, an actual charging current value of the battery unit 11 and a preset limited charging current value of the battery unit 11 may be acquired, and an actual power value of the load 300 and a preset power value of the load 300 may be acquired.

In an operation S402, a second difference value between the limited charging current value and an acquired second preset current value may be calculated.

Operations S401 to S402 may be the same as operations S101 to S102 of the above embodiments, and will not be repeated here.

In an operation S403, a current return difference value and a power return difference value may be acquired, and the current return difference value may be less than the second difference value and the power return difference value may be greater than the preset power value.

The current return difference value and the power return difference value may be acquired by the control unit 13. The current return difference value may be less than the second difference value and the power return difference value may be greater than the preset power value.

In some embodiments, the third preset current value may be acquired by the control unit 13. The third preset current value may be greater than the second preset current value. The current return difference value may be obtained by the control unit 13 by subtracting the third preset current value from the limited charging current value. For example, the second preset current value may be 0.2A, and the third preset current value may be 0.5A, so the current return difference value may be less than the second difference value.

The first preset power value may be obtained by the control unit 13. The power return difference value may be obtained by the control unit 13 by adding the first preset power value to the preset power value. For example, the first preset power value may be 10W, the power return difference value may be obtained by the control unit 13 by adding 10W to the preset power value. In this case, the power return difference value may be greater than the preset power value.

In an operation S404, the second heating control signal may be obtained based on a preset heating current value and the parameters of the heating unit, in a case where the actual charging current value is greater than or equal to the current return difference value and the actual power value is greater than the power return difference value.

In a case where the actual charging current value is greater than or equal to the current return difference value and the actual power value is greater than the power return difference value, the second heating control signal may be obtained by the control unit 13 based on the preset heating current value and the parameters of the heating unit. The second heating control signal may be configured to make the heating unit 12 heat the battery unit 11 based on the second heating control signal. The preset heating current value may be the heating current value of the above embodiments.

Since the current return difference value is less than the second difference value and the power return difference value is greater than the preset power value, the actual charging current value may be greater than or equal to the second difference value and the actual power value may be greater than the preset power value, in a case where the actual charging current value is greater than or equal to the current return difference value and the actual power value is greater than the power return difference value.

In an operation S405, the current actual charging current value of the battery unit 11 and the first preset current value may be acquired.

In an operation S406, the first difference value between the preset limited charging current value and the acquired first preset current value may be calculated.

In an operation S407, the first heating control signal may be obtained based on the current actual charging current value, the first difference value, the second difference value and the parameters of the heating unit, the first heating control signal may be configured to make the heating unit 12 heat the battery unit 11 based on the first heating control signal, and the operation of acquiring the current actual charging current value of the battery unit 11 and the first preset current value may be repeated until the current actual charging current value of the battery unit 11 is greater than the first difference value and less than the second difference value. The second difference value is a difference between the limited charging current value and an acquired second preset current value, and the second preset current value is less than the first preset current value.

Operations S405 to S407 are the same as operations S104 to S106 of the above embodiments, and will not be repeated here.

In some embodiments, the current return difference value and the power return difference value may be acquired. The current return difference value may be less than the second difference value and the power return difference value may be greater than the preset power value. In a case where the actual charging current value is greater than or equal to the current return difference value and the actual power value is greater than the power return difference value, the second heating control signal may be obtained based on the preset heating current value and the parameters of the heating unit. In this way, the charging device 200 may be ensured to meet the charging demand of the battery unit 11 and the preset power of the load 300 before the heating unit 12 is controlled to heat the battery unit 11 based on the first heating control signal, thus reducing the possibility of overload of the charging device 200.

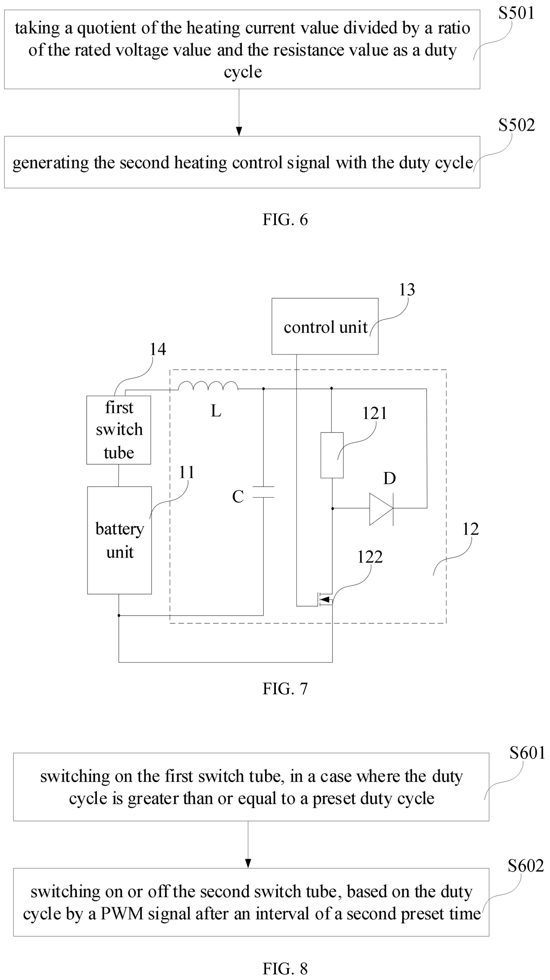

Based on some embodiments of the present disclosure, as shown in FIG. 6, FIG. 6 is a schematic flow diagram of some embodiments of operation S103 in FIG. 2. The parameters of the heating unit 12 of some embodiments include the rated voltage value and the resistance value, and operation S103 may include the following operations.

In an operation S501, a quotient of the heating current value divided by a ratio of the rated voltage value and the resistance value may be taken as a duty cycle.

The quotient of the heating current value divided by a ratio of the rated voltage value to the resistance value may be taken as a duty cycle. For example, the heating current value may be 0.2A, the rated voltage value of the heating unit 12 may be 16V, and the resistance value of the heating unit 12 may be 6.4Ω. In this case, the duty cycle may be calculated by the control unit 13 as 0.2*6.4/16=0.08. That is, the duty cycle may be 8%. For another example, the heating current value may be 1.2A, the rated voltage value of the heating unit 12 may be 16V, and the resistance value of the heating unit 12 may be 6.4Ω. In this case, the duty cycle may be calculated by the control unit 13 as 1.2*6.4/16=0.48. That is, the duty cycle may be 48%.

In an operation S502, the second heating control signal may be generated with the duty cycle.

The second heating control signal may be generated by the control unit 13 with the duty cycle. The second heating control signal may be configured to make the heating unit 12 heat the battery unit 11 based on the second heating control signal. The first heating control signal may also be generated by the control unit 13 through the above operations, which will not be repeated here.

In some embodiments, the quotient of the heating current value divided by the ratio of the rated voltage value and the resistance value may be taken as a duty cycle. The second heating control signal may be generated with the duty cycle. In this way, the duty cycle may be calculated and the second heating control signal may be generated with the duty cycle, thereby improving the accuracy of the duty cycle.

Based on some embodiments of the present disclosure, as shown in FIG. 7 and FIG. 8, FIG. 7 is a schematic circuit diagram of some embodiments of the energy storage device in FIG. 1, and FIG. 8 is a schematic flow diagram of some embodiments of operation S103 of the energy storage device in FIG. 7. The energy storage device 100 of some embodiments may further include a first switch tube 14. An end of the first switch tube 14 is connected to the battery unit 11 and another end of the first switch tube 14 is connected to the heating unit 12. The heating unit 12 may include a heating film 121 and a second switch tube 122. The second switch tube 122 may be connected in series with the heating film 121. The control unit 13 may be connected to a control terminal of the first switch tube 14 and a control terminal of the second switch tube 122, respectively. Operation S103 may include the following operations.

In an operation S601, the first switch tube 14 may be switched on, in a case where the duty cycle is greater than or equal to a preset duty cycle.

The duty cycle may be compared by the control unit 13 with the preset duty cycle. In a case where the duty cycle is greater than or equal to the preset duty cycle, the first switch tube 14 may be switched on by the control unit 13. In this case, the battery unit 11 may be connected to the heating unit 12 through the first switch tube 14.

For example, the preset duty cycle may be 5%, and the duty cycle may be 8%. That is, in a case where the duty cycle is greater than the preset duty cycle, the first switch tube 14 may be switched on by the control unit 13.

In an operation S602, the second switch tube 122 may be switched on or off based on the duty cycle via a Pulse Width Modulation (PWM) signal, after an interval of a second preset time.

The second switch tube 122 may be switched on or off by the control unit 13 based on the duty cycle via the PWM signal after the interval of the second preset time. Therefore, the second switch tube 122 may be switched on or off based on the duty cycle of the second heating control signal. The second heating control signal may be the PWM signal. For example, the second preset time may be 10ms, and the second switch tube 122 may be switched on or off by the control unit 13 based on the duty cycle via a PWM signal of 10ms, after the first switch tube 14 is switched on by the control unit 13.

Some embodiments of the heating control method may further include the following operations. The operation of outputting the PWM signal to the second switch tube 122 may be stopped, and the first switch tube 14 may be switched off after the interval of the second preset time. The operation of outputting the PWM signal to the second switch tube 122 may be stopped by the control unit 13, and the first switch tube 14 may be switching off by the control unit 13 after the interval of the second preset time.

For example, the control unit 13 may stop outputting the PWM signal to the second switch tube 122 and switch off the first switch tube 14 after an interval of 10ms.

In some embodiments, the first switch tube 14 may be switched on, in a case where the duty cycle is greater than or equal to the preset duty cycle. After the interval of the second preset time, the second switch tube 122 may be switched on or off based on the duty cycle via the PWM signal. In this way, the second switch tube 122 may be controlled to work based on the duty cycle under the condition that the energy storage device 100 works stably, which may improve the stability. By stopping the output of the PWM signal to the second switch tube 122 and switching off the first switch tube 14 after the interval of the second preset time, the stability may be further improved.

The present disclosure may further provide an energy storage device 100, as shown in FIG. 1 and FIG. 7. The energy storage device 100 may be configured to connect a charging device 200 and a load 300. The charging device 200 may be configured to supply power to the energy storage device 100 and the load 300. The energy storage device 100 may include a control unit 13, a battery unit 11 and a heating unit 12 connected in parallel with the battery unit 11. An end of the heating unit 12 may be electrically connected to an end of the battery unit 11. Another end of the heating unit 12 may be electrically connected to another end of the battery unit 11. The control unit 13 may be connected to the charging device 200, the battery unit 11, the heating unit 12 and the load 300, respectively. The control unit 13 may control the energy storage device 100 based on the heating control method of the above embodiments. The first switch tube 14 may be a triode, a relay or a MOS transistor.

The energy storage device 100 may further include the first switch tube 14. The heating unit 12 may include a capacitor C, an inductor L, a heating film 121, a second switch tube 122 and a diode D. An end of the battery unit 11 may be connected to an end of the heating film 121 through the first switch tube 14 and the inductor L. An end of the capacitor C may be connected to the end of the battery unit 11 through the first switch tube 14 and the inductor L. Another end of the capacitor C may be connected to another end of the battery unit 11. Another end of the battery unit 11 may be connected to a source of the second switch tube 122. A drain of the second switch tube 122 may be connected to another end of the heating film 121. An anode of the diode D may be connected to the another end of the heating film 121. A cathode of the diode D may be connected to the end of the heating film 121. The control unit 13 may be connected to a gate of the second switch tube 122. In some embodiments, the second switch tube 122 may be an N-type MOS transistor. In some embodiments, the second switch tube 122 may also be a P-type MOS transistor.

In summary, in the present disclosure, in a case where the actual charging current value is greater than or equal to the second difference value and the actual power value is greater than the preset power value, a second heating control signal may be obtained based on the acquired heating current value and the parameters of the heating unit. The second heating control signal may be configured to make the heating unit heat the battery unit 11 based on the second heating control signal. In this way, the charging device 200 may be ensured to meet the charging demand of the battery unit 11 and the preset power of the load 300 before the heating unit 12 is controlled to perform heating, thus reducing the possibility of overload of the charging device 200. A first heating control signal may be obtained based on the current actual charging current value of the battery unit 11, the first difference value, the second difference value, and the parameters of the heating unit. The first heating control signal may be configured to make the heating unit 12 heat the battery unit 11 based on the first heating control signal. The operation of acquiring the current actual charging current value of the battery unit 11 and the first preset current value may be repeated until the current actual charging current value of the battery unit 11 is greater than the first difference value and less than the second difference value. In this way, the heating unit 12 may be adjusted by tracking the output of the charging device 200, thereby improving the heating efficiency of the heating unit 12 and increasing the utilization rate of the energy storage device 100. The dynamic adjustment of the first heating control signal and the second heating control signal may be adopted to adjust the heating unit 12, thereby ensuring that the battery unit 11 is always in a suitable temperature range, and reducing the possibility of performance degradation or potential safety hazards of the battery unit 11 caused by overheating or overcooling. The actual power value and the preset power value of the load 300 may be acquired in real time, and the actual power value may be greater than the preset power value. In this way, the power supply demand of the load 300 may be preferentially met when the power of the load 300 is high, thus reducing an influence of the high-power consumption of the heating unit 12 on the normal operation of the load 300. In addition, the heating unit 12 can reach its maximum heating power on the premise of avoiding the overload of the energy storage device 100.

The above descriptions are only some embodiments of the present disclosure, and shall not limit the protection scope of the present disclosure. Any equivalent structural or equivalent process transformation made by using the contents of the specification and the accompanying drawings of the present disclosure, or any direct or indirect application thereof in other relevant technical fields, shall be similarly included in the patent protection scope of the present disclosure.

## Claims

1. A heating control method for an energy storage device (100), applied to the energy storage device (100), **characterized in that**, the energy storage device (100) is configured to connect a charging device (200) and a load (300), the charging device (200) is configured to supply power to the energy storage device (100) and/or the load (300), the energy storage device (100) comprises a battery unit (11) and a heating unit (12) connected in parallel with the battery unit (11); the heating control method for the energy storage device comprises:
acquiring (S104) a current actual charging current value of the battery unit and a first preset current value;
calculating (S105) a first difference value between a preset limited charging current value of the battery unit and the acquired first preset current value;
obtaining (S106) a first heating control signal based on the current actual charging current value, the first difference value, a second difference value, and parameters of the heating unit (12), wherein the first heating control signal is configured to make the heating unit (12) heat the battery unit (11) based on the first heating control signal; and repeating the operation of acquiring (S104) the current actual charging current value of the battery unit (11) and the first preset current value, until the current actual charging current value of the battery unit (11) is greater than the first difference value and less than the second difference value; wherein the second difference value is a difference between the limited charging current value and an acquired second preset current value, and the second preset current value is less than the first preset current value.

2. The heating control method as claimed in claim 1, wherein before the acquiring (S104) a current actual charging current value of the battery unit and a first preset current value, the heating control method further comprises:
acquiring (S101) an actual charging current value of the battery unit and the preset limited charging current value of the battery unit; and acquiring an actual power value of the load and a preset power value of the load;
calculating (S102) the second difference value between the limited charging current value and the acquired second preset current value;
obtaining (S103) a second heating control signal based on an acquired heating current value and parameters of the heating unit, in a case where the actual charging current value is greater than or equal to the second difference value and the actual power value is greater than the preset power value, wherein the second heating control signal is configured to make the heating unit heat the battery unit based on the second heating control signal.

3. The heating control method as claimed in claim 2, wherein the heating control method further comprises:
repeating the operation of acquiring an actual charging current value of the battery unit and the preset limited charging current value of the battery unit after an interval of a first preset time, in a case where the current actual charging current value of the battery unit is greater than the first difference value and less than the second difference value.

4. The heating control method as claimed in claim 1, wherein the obtaining (S106) a first heating control signal based on the current actual charging current value, the first difference value, a second difference value, and parameters of the heating unit (12), comprises:
obtaining (S201) a first updated current value based on an acquired first updated value and the heating current value, in a case where the current actual charging current value is greater than or equal to the second difference value;
obtaining (S202) the first heating control signal, based on the first updated current value and the parameters of the heating unit (12).

5. The heating control method as claimed in claim 4, wherein the obtaining (S201) a first updated current value based on the acquired first updated value and the heating current value, comprises:
taking a sum of the acquired first updated value and the heating current value as the first updated current value.

6. The heating control method as claimed in claim 1, wherein the obtaining (S106) a first heating control signal based on the current actual charging current value, the first difference value, a second difference value, and parameters of the heating unit (12), further comprises:
obtaining (S301) a second updated current value based on an acquired second updated value and the heating current value, in a case where the current actual charging current value is less than or equal to the first difference value;
obtaining (S302) the first heating control signal, based on the second updated current value and the parameters of the heating unit (12).

7. The heating control method as claimed in claim 6, wherein the obtaining (S301) a second updated current value based on an acquired second updated value and the heating current value, comprises:
taking a difference value between the limited charging current value and the current actual charging current value of the battery unit (11) as the second updated value.

8. The heating control method as claimed in claim 7, wherein the obtaining (S301) a second updated current value based on an acquired second updated value and the heating current value, further comprises:
taking a difference value between the heating current value and the second updated value as the second updated current value.

9. The heating control method as claimed in claim 1, wherein before the acquiring a current actual charging current value of the battery unit and a first preset current value, the heating control method further comprises:
acquiring (S403) a current return difference value and a power return difference value, wherein the current return difference value is less than the second difference value and the power return difference value is greater than the preset power value;
obtaining (S404) the second heating control signal based on a preset heating current value and the parameters of the heating unit (12), in a case where the actual charging current value is greater than or equal to the current return difference value and the actual power value is greater than the power return difference value.

10. The heating control method as claimed in claim 9, wherein the acquiring (S403) a current return difference value and a power return difference value, comprises:
acquiring a third preset current value, wherein the third preset current value is greater than the second preset current value;
obtaining the current return difference value by subtracting the third preset current value from the limited charging current value.

11. The heating control method as claimed in claim 9, wherein the acquiring (S403) a current return difference value and a power return difference value, further comprises:
obtaining a first preset power value;
obtaining the power return difference value by adding the first preset power value to the preset power value.

12. The heating control method as claimed in claim 2, wherein the parameters of the heating unit (12) comprise a rated voltage value and a resistance value; and the obtaining (S103) a second heating control signal based on the acquired heating current value and the parameters of the heating unit (12), comprises:
taking (S501) a quotient of the heating current value divided by a ratio of the rated voltage value and the resistance value as a duty cycle;
generating (S502) the second heating control signal with the duty cycle.

13. The heating control method as claimed in claim 12, wherein the energy storage device (100) comprises a first switch tube (14); an end of the first switch tube (14) is connected to the battery unit (11) and another end of the first switch tube (14) is connected to the heating unit (12); the heating unit (12) comprises a heating film (121) and a second switch tube (122), the second switch tube (122) is connected in series with the heating film (121); and the first heating control signal is configured to make the heating unit (12) heat the battery unit (11) based on the first heating control signal , comprises:
switching (S601) on the first switch tube (14), in a case where the duty cycle is greater than or equal to a preset duty cycle;
switching (S602) on or off the second switch tube (122), based on the duty cycle by a Pulse Width Modulation (PWM) signal after an interval of a second preset time;
the heating control method further comprising:
stopping outputting the PWM signal to the second switch tube (122), and switching off the first switch tube (14) after an interval of the second preset time.

14. An energy storage device (100), **characterized in that** the energy storage device (100) is configured to connect a charging device (200) and a load (300); the charging device (200) is configured to supply power to the energy storage device (100) and the load (300);
the energy storage device (100) comprises:
a control unit (13),
a battery unit (11), and
a heating unit (12) connected in parallel with the battery unit (11);
wherein the control unit (13) is connected to the charging device (200), the battery unit (11), the heating unit (12), and the load (300), respectively;
the control unit (13) is configured to control the energy storage device (100) based on a heating control method, the heating control method as claimed in any one of claims 1-13.

15. The energy storage device (100) as claimed in claim 14, wherein the energy storage device (100) comprises a first switch tube (14); the heating unit (12) comprises a capacitor (C), an inductor (L), a heating film (121), a second switch tube (122), and a diode (D);
wherein an end of the battery unit (11) is connected to an end of the heating film (121) through the first switch tube (14) and the inductor (L); an end of the capacitor (C) is connected to the end of the battery unit (11) through the first switch tube (14) and the inductor (L), another end of the capacitor (C) is connected to another end of the battery unit (11); the another end of the battery unit (11) is connected to a source of the second switch tube (122); a drain of the second switch tube (122) is connected to another end of the heating film (121); an anode of the diode (D) is connected to the another end of the heating film (121), a cathode of the diode (D) is connected to the end of the heating film (121); and the control unit (13) is connected to a gate of the second switch tube (122).
